# EUROPEAN PATENT APPLICATION

(11) **EP 4 755 737 A1**
(43) Date of publication of application: **10.06.2026**
(21) Application number: 25218947.7
(22) Date of filing: 27.11.2025
(51) Int. Cl.: B60T 13/36, B60T 17/04, B60T 17/22

(54) **BRAKE CONTROL APPARATUS FOR RAILWAY VEHICLES, BRAKE CONTROL METHOD FOR RAILWAY VEHICLES AND BRAKE CONTROL PROGRAM FOR RAILWAY VEHICLES**

(30) Priority: 29.11.2024 JP 2024208537
(71) Applicant: Nabtesco Corporation, Tokyo 102-0093 (JP)
(72) Inventor: Yamana, Hiroya, Chiyoda-ku, Tokyo, 102-0093 (JP)
(74) Representative: Grünecker Patent- und Rechtsanwälte PartG mbB

(57) **Abstract**

A brake control apparatus for railway vehicles (50) includes: a flow sensor (80) provided in a flow path between a brake control valve (14) controlled according to a brake command and a brake cylinder (16t) operating according to a pressure of a fluid; a determination unit 62 that determines whether a fluid leak occurs based on an output value of the flow sensor (80); and an isolation valve (30) provided in a flow path (20) between the brake control valve (14) and the brake cylinder (16t); and an isolation control unit (64) that controls, by using the isolation valve (30), a downstream side of the isolation valve (30) in the flow path (20) to be isolated from an upstream side of the isolation valve (30) when a fluid leak is identified.

## Description

The present disclosure relates to a brake control apparatus for railway vehicles, brake control method for railway vehicles, and brake control program for railway vehicles.

Patent literature 1 describes adjusting a flow rate using multiple regulating valves in the piping that supplies a compressed air supplied from the tank to the braking system of railway vehicles. In such piping, an air leak could occur. A conventional practice in the event of an air leak in the piping is to suppress the air flow by using the orifice provided in the piping. Also, the flow path is isolated by manual cock operation.

[Patent literature 1] JP 2024-10956

Even if the air flow is suppressed by the orifice as in the related art, however, it is inevitable that the pressure of the compressed air supplied to the brake cylinder will decrease due to an air leak.

The present disclosure addresses the above issue, and a purpose thereof is to provide a technology capable of reducing the impact of fluid leakage in railway vehicle brakes even when a fluid leak occurs in the flow path leading to the brake cylinder.

A brake control apparatus for railway vehicles according to an embodiment of the present disclosure includes: a flow sensor provided in a flow path between a brake control valve controlled according to a brake command and a brake cylinder operating according to a pressure of a fluid; an isolation valve provided in a flow path between the brake control valve and the brake cylinder; a determination unit that determines whether a fluid leak occurs based on an output value of the flow sensor; and an isolation control unit that controls, by using the isolation valve a downstream side of the isolation valve in the flow path to be isolated from an upstream side of the isolation valve when a fluid leak is identified.

A brake control method for railway vehicles according to an embodiment of the present disclosure includes: determining whether a fluid leak occurs based on an output value of a flow sensor provided in a flow path between a brake control valve controlled according to a brake command and a brake cylinder operating according to a pressure of a fluid; and controlling, by using an isolation valve provided in the flow path between the brake control valve and the brake cylinder, a downstream side of the isolation valve in the flow path to be isolated from an upstream side of the isolation valve when a fluid leak is identified.

A brake control program for railway vehicle according to an embodiment of the present disclosure includes computer-implemented modules including: a module that determines whether a fluid leak occurs based on an output value of a flow sensor provided in a flow path between a brake control valve controlled according to a brake command and a brake cylinder operating according to a pressure of a fluid; and a module that controls, by using an isolation valve provided in a flow path between the brake control valve and the brake cylinder, a downstream side of the isolation valve in the flow path to be isolated from an upstream side of the isolation valve when a fluid leak is identified.

Optional combinations of the aforementioned embodiments, and mutual substitution of constituting elements and implementations of the present disclosure between methods, apparatuses, programs, transitory or non-transitory recording mediums storing the program, systems, etc. may also be practiced as additional embodiments of the present disclosure.
Fig. 1 is a side view schematically showing a railway vehicle to which the railway brake control apparatus according to the first embodiment is applied;
Fig. 2 is a block diagram showing the configuration of the brake control apparatus shown in Fig. 1;
Fig. 3 is a block diagram showing an exemplary configuration related to the flow path of the railway vehicle;
Fig. 4 is a block diagram showing another exemplary configuration related to the flow path of the railway vehicle;
Fig. 5 schematically shows an exemplary configuration around the slip control valve;
Fig. 6 schematically shows an exemplary configuration around the slip control valve;
Fig. 7 schematically shows an exemplary configuration around the slip control valve;
Fig. 8 is a pneumatic circuit diagram schematically showing an example of the isolation valve;
Fig. 9 is a pneumatic circuit diagram schematically showing an example of the isolation valve;
Fig. 10 is a pneumatic circuit diagram schematically showing another example of the isolation valve;
Fig. 11 is a pneumatic circuit diagram schematically showing another example of the isolation valve;
Fig. 12 schematically shows an exemplary time-dependent change in the brake pressure in the presence of a brake command;
Fig. 13 is a flow chart showing exemplary isolation control by the brake control apparatus;
Fig. 14 is a side view schematically showing a railway vehicle to which the railway brake control apparatus according to the second embodiment is applied;
Fig. 15 is a block diagram showing the configuration of the brake control apparatus shown in Fig. 14A; and
Fig. 16 is a block diagram showing an exemplary configuration related to the flow path of the railway vehicle.

The invention will now be described by reference to the preferred embodiments. This does not intend to limit the scope of the present invention, but to exemplify the invention.

Of the embodiments disclosed in this specification, those composed of a plurality of objects may be such that the plurality of objects may be integrated, or, conversely, an object may be divided into a plurality of objects. Regardless of whether objects are integrated or not, they may be configured so as to achieve the purpose of the invention.

Of the embodiments disclosed in this specification, those in which a plurality of functions are provided in a distributed manner may be such that some or all of the plurality of functions may be aggregated, or, conversely, those in which a plurality of functions are aggregated may be such that some or all of the plurality of functions are distributed. Regardless of whether functions are aggregated or distributed, they may be configured so as to achieve the purpose of the invention.

Further, separate constituting elements that have something in common are distinguished by adding "first, second" or the like at the beginning of the name. These numerals are omitted when the constituting elements are referred to collectively. Although terms including ordinal numbers such as first and second are used to describe various constituting elements, these terms are used only for the purpose of distinguishing one constituting element from other constituting elements, and the constituting elements shall not be limited by these terms.

Hereinafter, the present disclosure will be described based on preferred embodiments with reference to the drawings. In the embodiments and variations, the same or equivalent constituting elements and members shall be denoted by the same reference numerals, and duplicative explanations will be omitted appropriately. The dimension of the members in the drawings shall be enlarged or reduced as appropriate to facilitate understanding. Those of the members that are not material to the description of the embodiments are omitted in the drawings.

### [First embodiment]

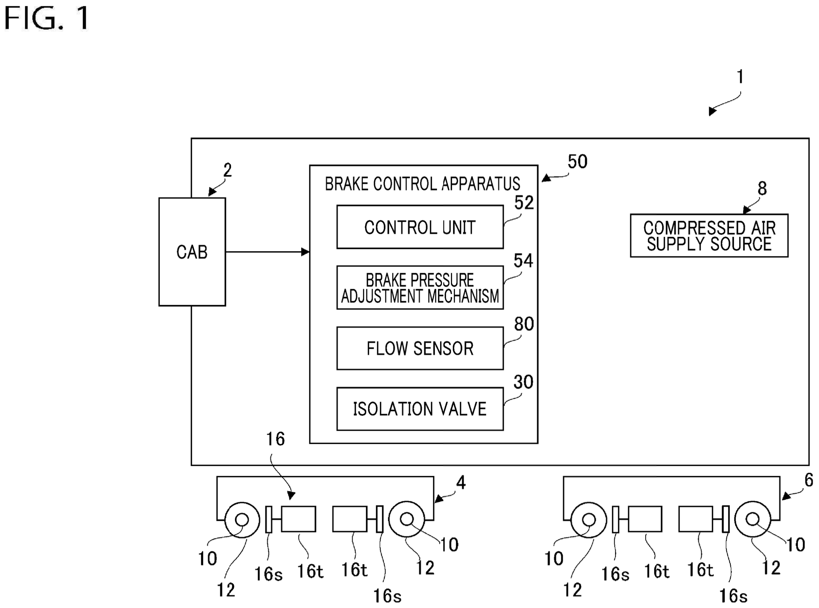

Hereinafter, a first embodiment will be described with reference to the drawing. Fig. 1 is a side view schematically showing a railway vehicle 1 to which the railway brake control apparatus (hereinafter referred to as "brake control apparatus 50") according to the first embodiment is applied. First, an overview of the railway vehicle 1 will be given.

The functional blocks depicted in the drawings, including Fig. 1, are implemented in hardware such as electronic devices, electronic circuits, and mechanical components like a CPU or a memory of a computer, and in software such as a computer program. Fig. 1 depicts functional blocks implemented by the cooperation of these elements. Therefore, it will be understood by those skilled in the art that the functional blocks may be implemented in a variety of manners by a combination of hardware and software.

As shown in Fig. 1, the railway vehicle 1 is equipped with a cab 2, a first carriage 4, a second carriage 6, a brake mechanism 16, a compressed air supply source 8, and a brake control apparatus 50. The cab 2 is provided frontward in direction of travel of the vehicle body. The first carriage 4 is provided beneath and toward the front of the vehicle body. The second carriage 6 is provided beneath and toward the rear of the vehicle body. The brake mechanism 16 is provided in each of the first carriage 4 and the second carriage 6.

The brake control apparatus 50 is equipped with a control unit 52, a brake pressure adjustment mechanism 54 that adjusts the pressure of a compressed air supplied to the brake mechanism 16 (hereinafter referred to as "brake pressure"), a flow sensor 80, and an isolation valve 30.

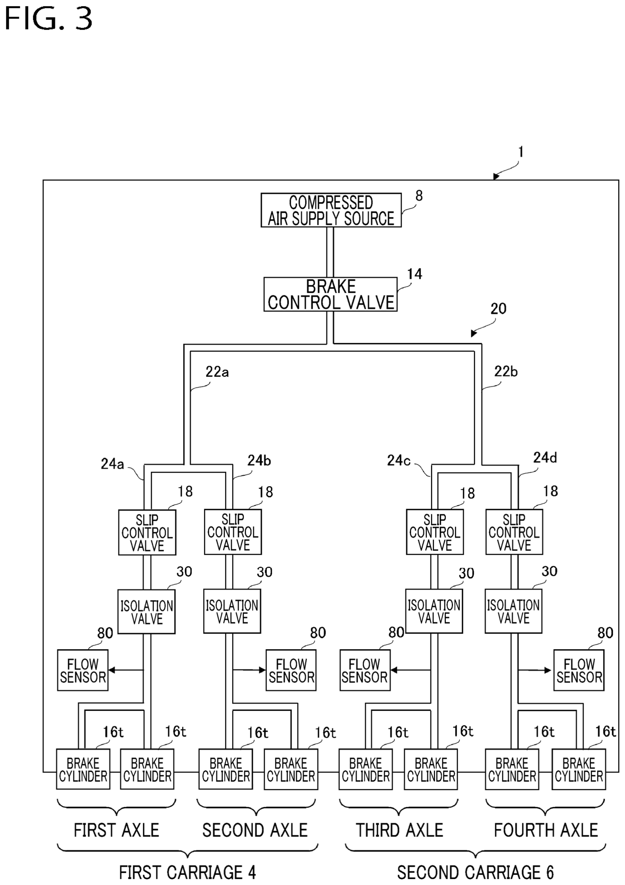

The compressed air supply source 8 is a tank that supplies the compressed air, and the pressure in the tank is kept within a predetermined range by means of an air pump. The compressed air supply source 8 is connected to one end of a flow path 20 (see Fig. 3) and functions as a source of supply of compressed air to the flow path 20. The compressed air supply source 8 is an example of a fluid supply source, and a pressurized fluid supplied by the fluid supply source may be a gas such as air, nitrogen, and inert gas or may be a liquid such as water and oil. Hereinafter, the pressurized fluid is described as being a compressed air.

The first carriage 4 and the second carriage 6 are respectively provided with two axles 10 distanced in the longitudinal direction. A wheel 12 is mounted at both ends of the axle 10. The brake mechanism 16 operates in accordance with the brake pressure. The brake mechanism 16 has a friction member 16s that generates a braking force on the wheel 12 and a brake cylinder 16t that drives the friction member 16s.

The friction member 16s is, for example, a brake pad. The brake cylinder 16t is connected to the other end of the flow path 20 (see Fig. 3), i.e., to the end opposite to one end of the flow path 20 to which the compressed air supply source 8 is connected. The brake cylinder 16t is activated as the compressed air having a brake pressure is supplied through the flow path 20 to increase the brake cylinder pressure. When the brake cylinder 16t is activated, the friction member 16s is pressed against the tread of the wheel 12, creating a braking force on the wheel 12.

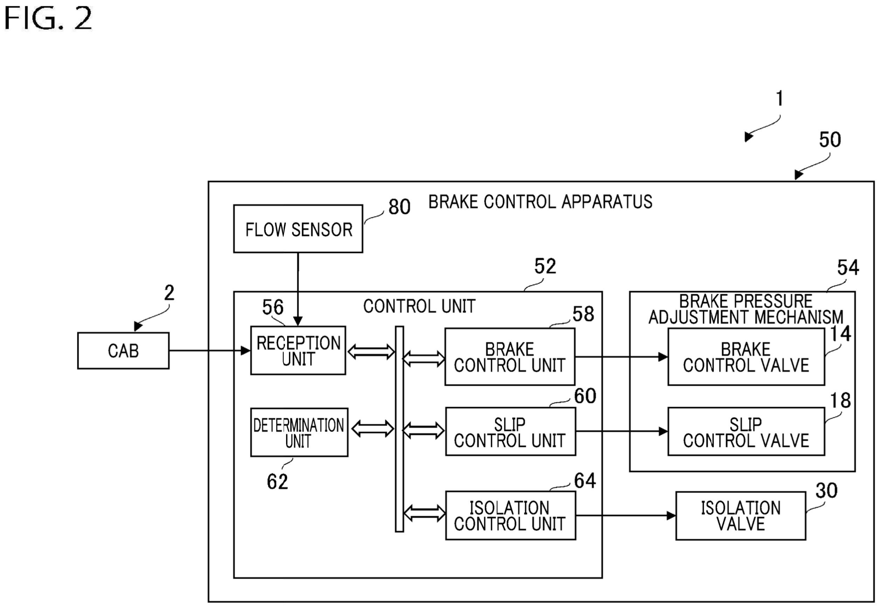

Details of the railway vehicle 1 will be described with reference to Fig. 2 and Fig. 3. Fig. 2 is a block diagram showing the configuration of the brake control apparatus 50. As shown in Fig. 2, the control unit 52 includes a reception unit 56, a brake control unit 58, a slip control unit 60, a determination unit 62, and an isolation control unit 64. The brake pressure adjustment mechanism 54 includes a brake control valve 14 and a slip control valve 18.

Fig. 3 is a block diagram showing an exemplary configuration related to the flow path 20 of the railway vehicle 1. The flow path 20 is a supply channel partitioned by piping, etc. to supply the compressed air. As mentioned above, the compressed air supply source 8 is connected to one end of the flow path 20, and the brake cylinder 16t is connected to the other end. Hereinafter, the side of the flow path 20 to which the compressed air supply source 8 is connected is referred to as the upstream side, and the side to which the brake cylinder 16t is connected will be referred to as the downstream side.

The brake control valve 14 is a valve mechanism provided in the flow path 20 between the compressed air supply source 8 and the brake cylinder 16t and configured to regulate the amount of compressed air supplied to the brake cylinder 16t. The brake control valve 14 is controlled in response to a brake command from the cab 2. The brake control valve 14 may be a control valve for service braking or a control valve for emergency braking.

The flow path 20 branches into two first branch paths 22a and 22b on the downstream side of the brake control valve 14. The flow path 20 further branches into two second branch paths 24a and 24b on the downstream side of one first branch path 22a and further branches into two second branch paths 24c and 24d on the downstream side of the other first branch path 22b. The four second branch paths 24a-24d correspond to the first-fourth axles, respectively. The flow path 20 further branches on the downstream side of each of the four second branch paths 24a-24d, and each branch destination is connected to one brake cylinder 16t. The flow path 20 is partitioned by, for example, a pipe made of metal that partitions most of the flow path 20 and an air hose made of flexible resin etc. connecting the pipe and the brake cylinder 16t. An air leak from the flow path 20 could occur especially due to the breakage of the air hose.

The slip control valve 18 is provided in the flow path 20 between the brake control valve 14 and the brake cylinder 16t. The slip control valve 18 is a valve mechanism that eliminates skipping by reducing the brake pressure by discharging air out of the flow path 20 when the wheel 12 slips while the railway vehicle 1 is being braked by the brake mechanism 16. Multiple slip control valves 18 are provided to correspond to the multiple axles 10 of the railway vehicle 1, respectively. Specifically, a total of four slip control valves 18 are provided so that one corresponds to each of the four axles 10 of the railway vehicle 1. In other words, four slip control valves 18 are provided one each in the four second branch paths 24a-24d. The operation of the slip control valve 18 will be described in detail later.

The isolation valve 30 is provided in the flow path 20 between the brake control valve 14 and the brake cylinder 16t. The isolation valve 30 is configured to include a solenoid valve. In a non-energized state in which power is not supplied, the isolation valve 30 provides communication between the upstream side and the downstream side of the position in the flow path 20 where the isolation valve 30 is provided. In an energized state in which power is supplied, the isolation valve 30 isolates the downstream side of the position in the flow path 20 where the isolation valve 30 is provided from the upstream side. In the example shown in Fig. 3, the isolation valve 30 is provided one each in the second branch paths 24a-24d, respectively. Details of the operation of the isolation valve 30 will be described later.

The flow sensor 80 is provided in the flow path 20 between the brake control valve 14 and the brake cylinder 16t. Specifically, the flow sensor 80 is provided between the isolation valve 30 and the brake cylinder 16t. The flow sensor 80 detects the flow rate of compressed air flowing in the flow path 20 and outputs the flow rate to the reception unit 56 of the control unit 52. In the example shown in Fig. 3, the flow sensor 80 is provided one each in the second branch paths 24a-24d, respectively.

As discussed above, the compressed air supplied from the compressed air supply source 8 is supplied to the brake control valve 14 via the flow path 20 according to the configuration shown in Fig. 3. The compressed air supplied to the brake control valve 14 is regulated in volume by the brake control valve 14 and is supplied to each of the four slip control valves 18. The compressed air supplied to each of the four slip control valves 18 is regulated in volume by each of the four slip control valves 18 and is supplied to the brake cylinder 16t. However, the compressed air is supplied to the brake cylinder 16t when an air leak from the flow path 20 does not occur and the isolation valve 30 is in a non-energized state.

As shown in Fig. 2, the reception unit 56 receives the brake command from the cab 2 and input signals from other apparatuses. The brake command includes a brake command that requires a braking state of the brake mechanism 16 and a loosening command that requires a loosened state of the brake mechanism 16. The brake command is a command for activating the brake mechanism 16 to generate a target braking force designated in accordance with a braking operation.

The reception unit 56 further receives the value of the flow rate in the flow path 20, which is the output value of the flow sensor 80.

The brake control unit 58 controls the brake control valve 14 based on the brake command. The brake control unit 58 starts or increases the supply of compressed air from the brake control valve 14 in accordance with the brake command. The brake control unit 58 stops or reduces the supply of compressed air from the brake control valve 14 in accordance with the loosening command.

The slide control unit 60 determines whether a slip of the wheel 12 occurs while the brake mechanism 16 is being controlled. The slide control unit 60 may detect a slip of the wheel 12 by adopting any of various publicly known methods. For example, the slip control unit 60 can determine whether a slip occurs based on a comparison between the rotational speed of the axle 10 and the translational speed of the railway vehicle 1. When the sliding control unit 60 determines that a slip of the wheel 12 occurs, the sliding control unit 60 eliminates the slip by controlling the slip control valve 18 to reduce the brake pressure.

The determination unit 62 determines whether air leak occurs based on the output value of the flow sensor 80 received by the reception unit 56. The determination unit 62 determines whether an air leak occurs individually at the position of each flow sensor 80 based on the output value of the multiple flow sensors 80. Details of determination by the determination unit 62 will be described later.

When an air leak is identified by the determination unit 62, the isolation control unit 64 controls, by using the isolation valve 30 provided in the same branch path as that of the flow sensor 80 used for identification of the air leak, the downstream side of the isolation valve 30 in the flow path 20 to be isolated from the upstream side of the isolation valve 30. Specifically, the isolation control unit 64 controls the downstream side of the isolation valve 30 to be isolated from the upstream side of the isolation valve 30 by placing the isolation valve 30 in an energized state. In this way, the downstream side of the isolation valve 30 in the flow path 20 determined to have a fluid leak can be isolated so that self-running using other brakes is enabled even if a fluid leak from the flow path 20 occurs while the railway vehicle 1 is running. This reduces the impact of fluid leakage.

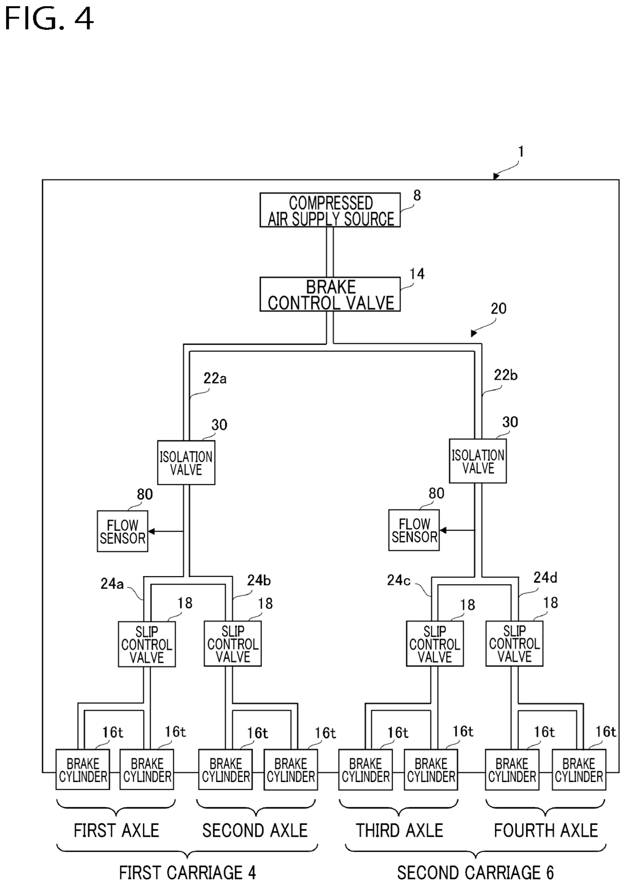

Fig. 4 is a block diagram showing another exemplary configuration related to the flow path 20 of the railway vehicle 1. In the example shown in Fig. 4, the position at which the isolation valve 30 and the flow sensor 80 are provided is different from that of the example shown in Fig. 3. Specifically, a total of four isolation valves 30 and a total of four flow sensors 80 are provided one each in the second branch paths 24a-24d, respectively, in the example shown in Fig. 3. In the example shown in Fig. 4, on the other hand, a total of two isolation valves 30 and a total of two flow sensors 80 are provided one each in the first branch paths 22a and 22b, respectively. In the example shown in Fig. 3, only the downstream side of one of the second branch path 24a-24d corresponding to a portion of a fluid leak is isolated so that the number of brake cylinders 16t in which the operation is stopped is minimized. In the example shown in Fig. 4, the number of isolation valves 30 and flow sensors 80 can be reduced as compared to the example shown in Fig. 3.

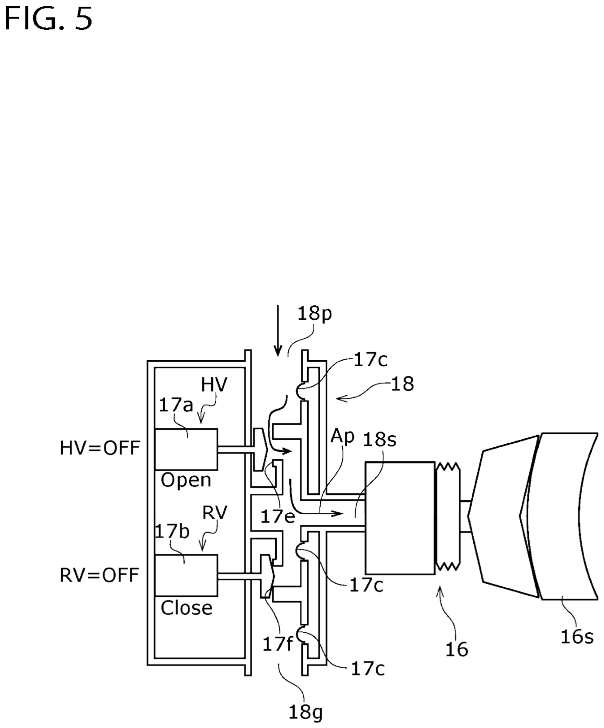

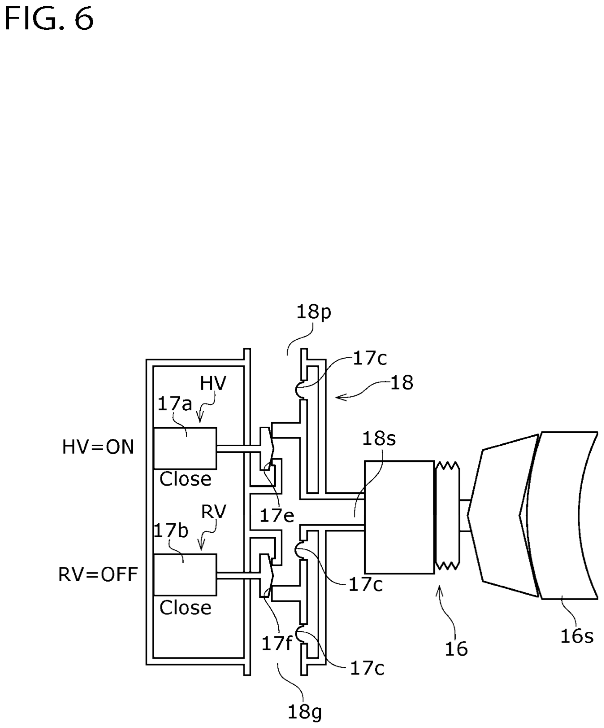

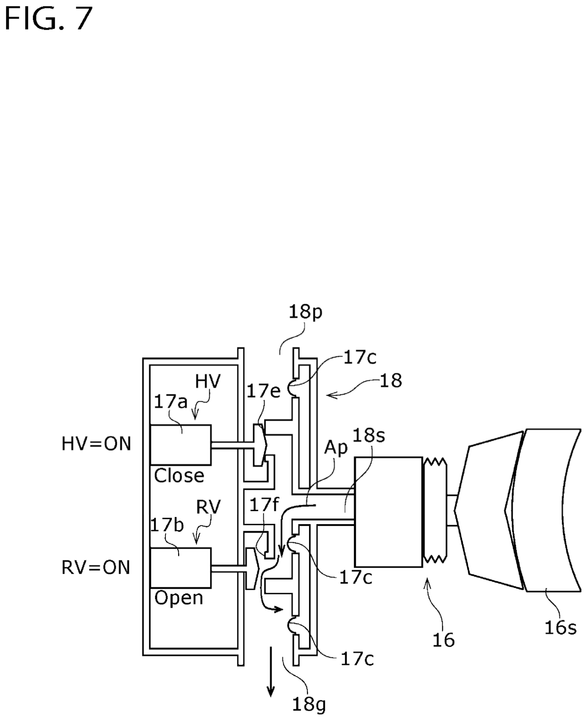

The operation of the slip control valve 18 will be described with reference to Fig. 5-7. Fig. 5-Fig. 7 schematically show an exemplary configuration around the slip control valve 18. Fig. 5 shows a supply state for generating a normal braking force in the brake mechanism 16. Fig. 6 shows a retention state in slip control for performing a retention operation to retain the braking force. Fig. 7 shows a discharge state in slip control for performing a discharging operation to decrease the braking force. In Fig. 5-Fig. 7, the brake mechanism 16 is arranged adjacent to the downstream side of the slip control valve 18 for the purpose of description, but the embodiment is not limited to this configuration.

The slip control valve 18 has a supply valve HV, a discharge valve RV, an inlet port 18p, an outlet port 18s, and an external discharge port 18g. The supply valve HV controls the supply of a compressed air Ap to the downstream side of the flow path 20. The supply valve HV has a driven unit 17a, a valve body 17c, and a valve unit 17e. The discharge valve RV controls the discharge of the compressed air Ap outside the flow path 20. The discharge valve RV has a driven unit 17b, a valve body 17c, and a valve unit 17f. When the driven units 17a and 17b are energized and driven by the slip control unit 60, the driven units 17a and 17b causes the valve body 17c to advance or retract in the direction to open or close the valve (the horizontal direction in the figure) by an electromagnetic action. The valve body 17c blocks or opens the valve units 17e and 17f as the central part thereof advances or retracts.

In the supply state shown in Fig. 5, both the supply valve HV and the discharge valve RV are in a non-energized state. At this time, the valve unit 17e of the supply valve HV is in an open state, and the valve unit 17f of the discharge valve RV is in a closed state. When the valve unit 17e of the supply valve HV is in an open state, the compressed air Ap supplied from the slip control valve 18 to the inlet port 18p is supplied from the outlet port 18s to the brake mechanism 16. Since the valve unit 17f of the discharge valve RV is closed, the compressed air Ap does not enter or leave the external discharge port 18g.

When the compressed air Ap flows into the brake mechanism 16, the brake pressure increases, and the piston rod (not shown) advances to press the friction member 16s against the tread of the wheel 12. This action brakes the wheel 12.

In the retention state shown in Fig. 6, the supply valve HV is in energized state, and the discharge valve RV is in a non-energized state. At this time, the supply valve HV and the discharge valve RV are in a closed state, and the compressed air Ap does not enter or leave the inlet port 18p and the external discharge port 18g so that the compressed air Ap inside the brake mechanism 16 does not increase or decrease, and the brake pressure is maintained.

In the discharge state shown in Fig. 7, both the supply valve HV and the discharge valve RV are in an energized state. At this time, the valve unit 17e of the supply valve HV is in a closed state, and the valve unit 17f of the discharge valve RV is in an open state. Since the valve unit 17e of the supply valve HV is closed, the compressed air Ap does not enter or leave the inlet port 18p. During the period of the open state of the valve unit 17f of the discharge valve RV, a portion of the compressed air Ap inside the brake mechanism 16 passes through the discharge valve RV from the outlet port 18s and is drained outside from the external discharge port 18g.

When a portion of the compressed air AP inside the brake mechanism 16 is drained, the brake pressure decreases accordingly, and the pressure of the friction member 16s on the tread of the wheel 12 decreases, reducing the braking force. Therefore, the longer the period of the open state of the discharge valve RV, the larger the decrease of the braking force.

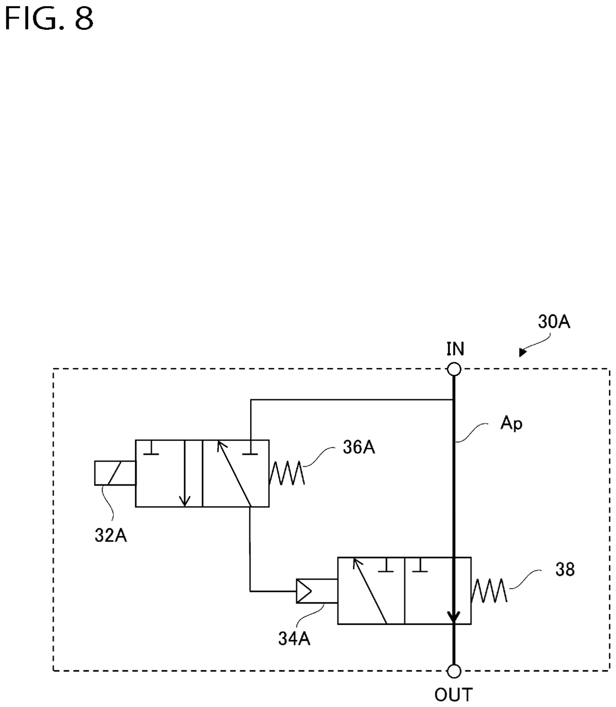

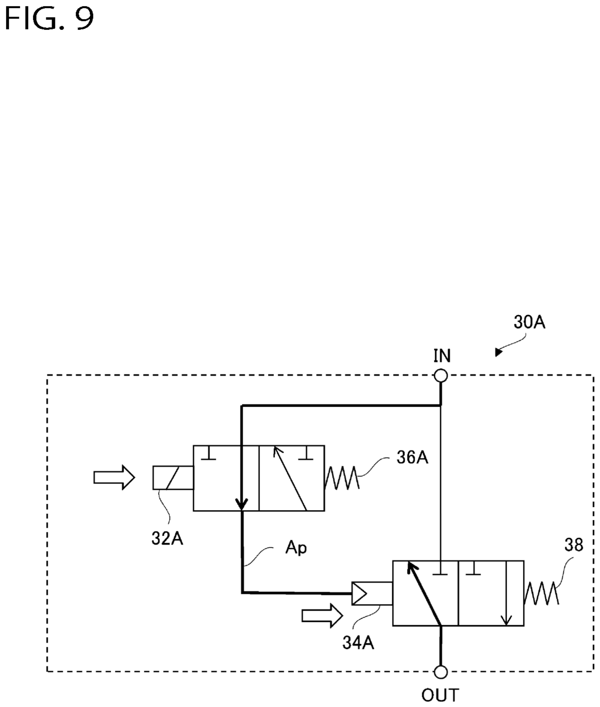

The operation of the isolation valve 30 will be described with reference to Fig. 8-Fig. 11. Fig. 8 and Fig. 9 are pneumatic circuit diagrams schematically showing an isolation valve 30A, which is an example of the isolation valve 30. Referring to Fig. 8 and Fig. 9, an inlet port IN is connected to the upstream side of the flow path 20, and an outlet port OUT is connected to the downstream side of the flow path 20. The isolation valve 30A includes a solenoid valve 32A and a pneumatic valve 34A. The isolation valve 30A and the pneumatic valve 34A function as a path switchover valve provided with different flow paths on the left and right sides of the figure. The solenoid valve 32A is biased in the left direction of the figure by a biasing member 36A such as an elastic spring. The pneumatic valve 34A is biased in the left direction of the figure by a biasing member 38A such as an elastic spring. In the isolation valve 30A, the flow path from the inlet port IN branches out, one branch being connected to the solenoid valve 32A, and the other branch being connected to the pneumatic valve 34A.

In the state shown in Fig. 8, the solenoid valve 32A is in a non-energized state. At this time, the solenoid valve 32A and the pneumatic valve 34A are biased in the left direction of the figure by the biasing force of the biasing member 36A. In this state, the flow path connected to the solenoid valve 32A from the inlet port IN is closed within the solenoid valve 32A, and so the compressed air Ap entering the inlet port IN is supplied to the downstream side of the flow path 20 from the outlet port OUT via the pneumatic valve 34A.

In the state shown in Fig. 9, the solenoid valve 32A is in an energized state. At this time, the solenoid valve 32A moves in the right direction of the figure due to energization. In this state, the flow path connected to the solenoid valve 32A from the inlet port IN reaches the end (the left end in the figure) of the pneumatic valve 34A via the solenoid valve 32A. As a result, the compressed air Ap entering the inlet port IN biases the pneumatic valve 34A in the right direction of the figure via the solenoid valve 32A, and so the pneumatic valve 34A moves in the right direction of the figure. At this time, the flow path connected to the pneumatic valve 34A from the inlet port IN is closed within the pneumatic valve 34A, and so the compressed air Ap entering the inlet port IN is not supplied from the outlet port OUT. Further, the flow path connected to the pneumatic valve 34A from the outlet port OUT reaches the discharge port of the pneumatic valve 34A, and so the flow path 20 on the downstream side of the isolation valve 30A is exhausted.

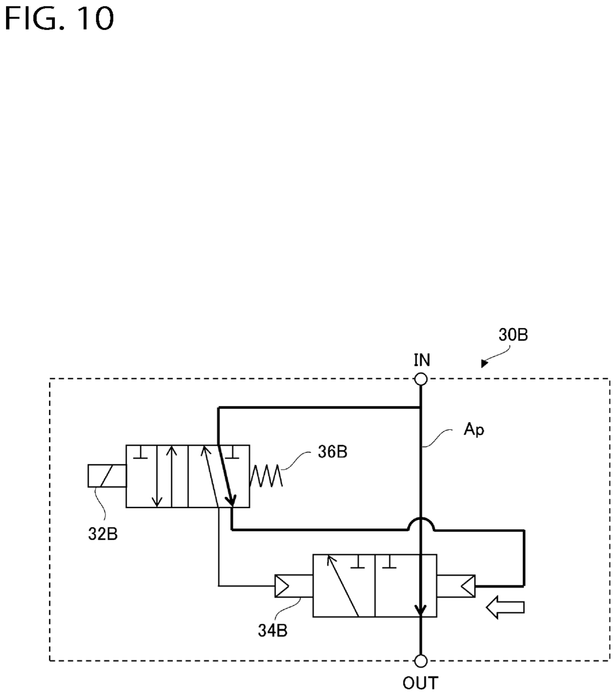

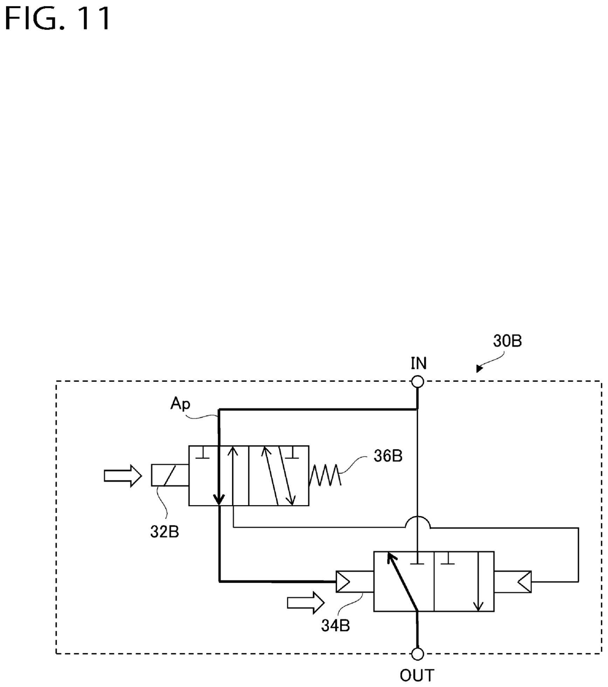

Fig. 10 and Fig. 11 are pneumatic circuit diagrams schematically showing an isolation valve 30B, which is another example of the isolation valve 30. Referring to Fig. 10 and Fig. 11, the inlet port IN is connected to the upstream side of the flow path 20, and the outlet port OUT is connected to the downstream side of the flow path 20. The isolation valve 30B includes a solenoid valve 32B and a pneumatic valve 34B. The isolation valve 30B and the pneumatic valve 34B function as a path switchover valves provided with different flow paths on the left and right of the figure. The solenoid valve 32B is biased in the left direction of the figure by a biasing member 36B such as an elastic spring. In the isolation valve 30B, the flow path from the inlet port IN branches out, one branch being connected to the solenoid valve 32B, and the other branch being connected to the pneumatic valve 34B.

In the state shown in Fig. 10, the solenoid valve 32B is in a non-energized state. At this time, the solenoid valve 32B is biased in the left direction of the figure by the biasing force of the biasing member 36B. In this state, the flow path connected to the solenoid valve 32B from the inlet port IN reaches the end (the right end in the figure) of the pneumatic valve 34B via the solenoid valve 32B. As a result, the compressed air Ap entering the inlet port IN biases the pneumatic valve 34B in the left direction of the figure via the solenoid valve 32B, and so the pneumatic valve 34B moves in the left direction of the figure. At this time, the flow path connected to the pneumatic valve 34B from the inlet port IN reaches the outlet port OUT, and so the compressed air Ap entering the inlet port IN is supplied from the outlet port OUT to the downstream side of the flow path 20 via the pneumatic valve 34B.

In the state shown in Fig. 11, the solenoid valve 32B is in an energized state. At this time, the solenoid valve 32B moves in the right direction of the figure due to energization. In this state, the flow path connected to the solenoid valve 32B from the inlet port IN reaches the end (the left end in the figure) of the pneumatic valve 34B via the solenoid valve 32B. As a result, the compressed air Ap entering the inlet port IN biases the pneumatic valve 34B in the right direction of the figure via the solenoid valve 32B, and so the pneumatic valve 34B moves in the right direction of the figure. At this time, the flow path connected to the pneumatic valve 34B from the inlet port IN is closed within the pneumatic valve 34B, and so the compressed air Ap entering the inlet port IN is not supplied from the outlet port OUT. Further, the flow path connected to the pneumatic valve 34B from the outlet port OUT reaches the exhaust port of the pneumatic valve 34B, and so the flow path 20 on the downstream side of the isolation valve 30B is exhausted.

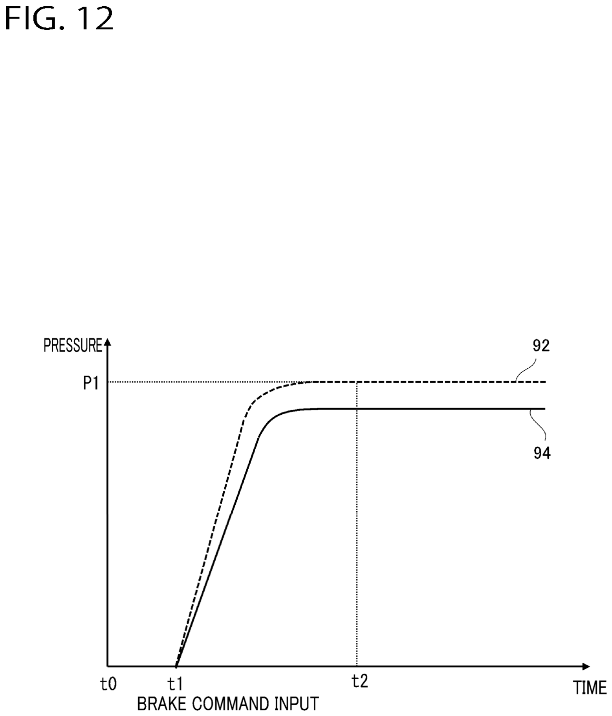

Fig. 12 schematically shows an exemplary time-dependent change in the brake pressure in the presence of a brake command. Fig. 12 shows a graph of the brake pressure, where the horizontal axis represents time, and the vertical axis represents pressure. Fig. 12 shows a brake pressure of 92 in the absence of an air leak and a brake pressure 94 in the presence of an air leak.

First, a description will be given of the brake pressure of 92 in the absence of an air leak. Between time t0 and time t1, no brake commands are entered. At this time, the brake pressure of 92 is not generated, and the value of the flow rate output from the flow sensor 80 is also zero.

At time t1, a brake command is entered, and the brake command is subsequently maintained. The brake control unit 58 controls the brake control valve 14 to result in the brake pressure determined by the brake command entered. This raises the brake pressure 92. When the brake pressure 92 starts to rise, the value of the flow rate output from the flow sensor 80 rises sharply.

As the brake pressure 92 rises and the brake pressure 92 approaches the brake pressure P1 designated by the brake command, the brake control unit 58 controls the brake control valve 14 to moderate the change in the brake pressure 9. The brake pressure 92 becomes almost constant near the brake pressure P1 designated by the brake command, and the brake pressure 92 becomes stable. At this time, the value of the flow rate output from the flow sensor 80 will also be smaller. At time t2, when the brake pressure 92 is stabilized, the value of the flow rate output from the flow sensor 80 is equal to or smaller than a predetermined threshold value α. Further, during the period when the brake pressure 92 is rising between time t and time t2, the value of the flow rate output from the flow sensor 80 is sufficiently greater than the threshold value α. The time required from time t1, when the brake command is entered, to time t2, when the brake pressure 92 is stabilized, is 2-3 seconds by way of example.

A description will now be given of the brake pressure 94 in the presence of an air leak. Between time t0 and time t1, no brake commands are entered, and so the brake pressure 94 is not generated, and the value of the flow rate output from the flow sensor 80 is also zero.

At time t1, a brake command is entered, and the brake command is maintained subsequently. The brake control unit 58 controls the brake control valve 14 to result in the brake pressure determined by the brake command entered. This raises the brake pressure 94. When the brake pressure 94 starts to rise, the value of the flow rate output from the flow sensor 80 rises sharply.

The brake pressure 94 rises, and the brake pressure 94 approaches the brake pressure P1 designated by the brake command. Due to the air leak occurring, however, the brake pressure of 94 does not reach the brake pressure P1. At this time, the compressed air is continuously supplied due to the air leak, and so the value of the flow rate output from the flow sensor 80 remains higher than in the absence of an air leak. After that, the value of the flow rate output from the flow sensor 80 remains higher than in the absence of an air leak even if the brake pressure 94 is apparently stabilized at time t2, etc. At time t2, the value of the flow rate output from the flow sensor 80 is greater than the threshold value α.

Fig. 12 shows an example in which the brake pressure of 94 in the presence of an air leak is stabilized at a pressure lower than the brake pressure P1. However, the brake pressure 94 in the presence of an air leak may be controlled to be stabilized near the brake pressure P1. The brake pressure of 94 in the presence of an air leak may not be stabilized even after time t2. In either of these cases, the compressed air is continuously supplied due to the air leak, and so, at time t2, the value of the flow rate output from the flow sensor 80 is greater than the threshold value α.

As described above, it is considered that an air leak occurs when the output value of the flow sensor 80 is greater than the threshold value α after the same brake command is maintained for a predetermined period of time. Therefore, the determination unit 62 of the embodiment determines that an air leak occurs when the output value of the flow sensor 80 is greater than the threshold value α after the same brake command is maintained for the predetermined period of time. The predetermined period of time in this case is a time required from time t1 to time t2 described above and is 2-3 seconds by way of example.

Different values may be used as the threshold value α described above depending on the brake pressure designated by the brake command. It is considered that the higher the brake pressure designated by the brake command, the higher the flow rate of compressed air so that a proper threshold value α determined by the brake command can be used by employing such a configuration.

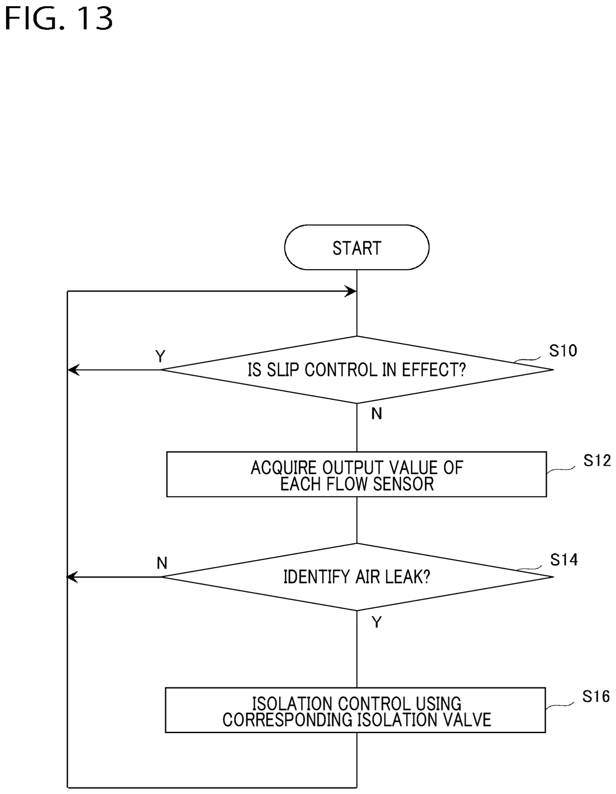

Fig. 13 is a flow chart showing exemplary isolation control by the brake control apparatus 50. The process shown in Fig. 13 is executed while, for example, the railway vehicle 1 is running.

When the wheel is under slip control by the slip control unit 60 (Y in S10), the brake control apparatus 50 returns to step S10. In other words, the brake control apparatus 50 does not execute isolation control in the subsequent step during slip control. This is to improve the accuracy of fluid leakage determination by eliminating the impact of slip control by the slip control valve 18 on the output value of the flow sensor 80.

The brake control apparatus 50 acquires the output value of each flow sensor 80 via the reception unit 56 (S12) when the wheel is not under slip control by the slip control unit 60 (N in S10). The determination unit 62 determines whether an air leak occurs at the position of each flow sensor 80 based on the output value of each flow sensor 80 (S14). When the determination unit 62 determines an air leak occurs (N in S14), control returns to step S10. When the determination unit 62 determines that an air leak occurs (Y in S14), control proceeds to step S16.

The isolation control unit 64 controls, by using the isolation valve 30 provided in the same branch path as that of the flow sensor 80 at the position where an air leak is determined to occur, the downstream side of the isolation valve 30 to be isolated from the upstream side (S16). The brake control apparatus 50 repeatedly executes steps S10-S16 to monitor air leakage in the flow path 20 while the railway vehicle 1 is running.

The brake control apparatus 50 may execute step S10 at a point of time between step S12 and step S14 or at a point of time between step S14 and step S16. In other words, the requirement is that the brake control apparatus 50 does not execute isolation control during slip control. The brake control apparatus 50 may acquire the output value of the flow sensor 80 during slip control or may determine whether an air leak occurs during slip control.

As described above, the brake control apparatus 50 of the embodiment is equipped with: a flow sensor 80 provided in a flow path between a brake control valve 14 controlled according to a brake command and a brake cylinder 16t operating according to a pressure of a fluid; an isolation valve 30 provided in a flow path 20 between the brake control valve 14 and the brake cylinder 16t; a determination unit 62 that determines whether a fluid leak occurs based on an output value of the flow sensor 80; and an isolation control unit 64 that controls, by using the isolation valve 30, a downstream side of the isolation valve 30 in the flow path 20 to be isolated from an upstream side of the isolation valve 30 when a fluid leak is identified. In this way, the downstream side of the isolation valve 30 in the flow path 20 determined to have a fluid leak can be isolated so that self-running using other brakes is enabled even if a fluid leak from the flow path 20 occurs while the railway vehicle 1 is running. This reduces the impact of fluid leakage.

In the brake control apparatus 50, the flow path 20 may branch between the brake control valve 14 and the multiple brake cylinders 16t. The multiple brake cylinders 16t may respectively be connected to branch paths at branch destinations of the flow path 20. Each of the flow sensor 80 and the isolation valve 30 may be provided in the branch path. This allows the downstream side of the isolation valve 30 in the branch path, of the branch paths to which the multiple brake cylinders 16t corresponding to one brake control valve 14 are connected, determined to have a fluid leak to be selectively isolated. Therefore, only the brake cylinder 16t affected by a fluid leak can be prevented from use so that the impact of fluid leakage can be further reduced.

In the brake control apparatus 50, the determination unit 62 may identify a fluid leak when the output value of the flow sensor 80 is greater than a threshold value after the same brake command is maintained for a predetermined time. In this way, it is possible to determine that the flow rate exceeds the threshold value due to a fluid leak, even at a point of time when, due to the same brake command being maintained, the brake pressure is stabilized and the flow rate of the fluid flowing in the flow path 20 is equal to or smaller than the threshold value absent any fluid leakage. Accordingly, the accuracy of fluid leakage determination is improved.

In the brake control apparatus 50, the threshold value may vary depending on the brake pressure designated by the brake command. This makes it possible to use a proper threshold value determined by the brake command because it is considered that the higher the brake pressure designated by the brake command, the higher the flow rate of the fluid.

In the brake control apparatus 50, the flow sensor 80 may be provided between the isolation valve 30 and the brake cylinder 16t. In this way, the flow sensor 80 is provided on the downstream side of the isolation valve 30 so that the a site of fluid leak can be isolated more reliably.

In the brake control apparatus 50, the isolation valve 30 is separate from the slip control valve 18. This enables a highly flexible design of operation control of the isolation valve 30 not constrained by the requirement such as certification of the slip control valve 18.

In the brake control apparatus 50, the isolation control unit 64 may perform isolation control when a fluid leak is identified while the slip control valve 18 is not effecting slip control. This eliminates the impact of slip control by the slip control valve 18 on the output value of the flow sensor 80 so that the accuracy of fluid leakage determination is further improved.

In the brake control apparatus 50, the isolation valve 30 may include a solenoid valve. The isolation control unit 64 may place the isolation valve 30 in an energized state when a fluid leak is identified. The isolation valve 30 may provide communication between the upstream side and the downstream side of the isolation valve 30 in a non-energized state and may isolate the downstream side of the isolation valve 30 from the upstream side in an energized state. This allows the brake cylinder 16t to operate normally even if power supply to the isolation valve 30 is no longer possible for some reason such as a malfunction.

In the brake control apparatus 50, the isolation valve 30 may exhaust the downstream side of the isolation valve 30 in an energized state. In this way, the downstream side of the isolation valve 30 is isolated and exhausted when a fluid leak is identified so that the operation of the brake cylinder 16t positioned on the downstream side of the site of fluid leak can be stopped more reliably.

[Second embodiment] Hereinafter, a second embodiment will be described. In the drawings and description of the second embodiment, the same or equivalent constituting elements or members as those of the first embodiment are denoted by the same reference numerals. Duplicative explanations from the first embodiment are omitted as appropriate, and features different from those of the first embodiment will be highlighted. The embodiment is an example of using the slip control valve 18 also as the isolation valve 30 in the first embodiment.

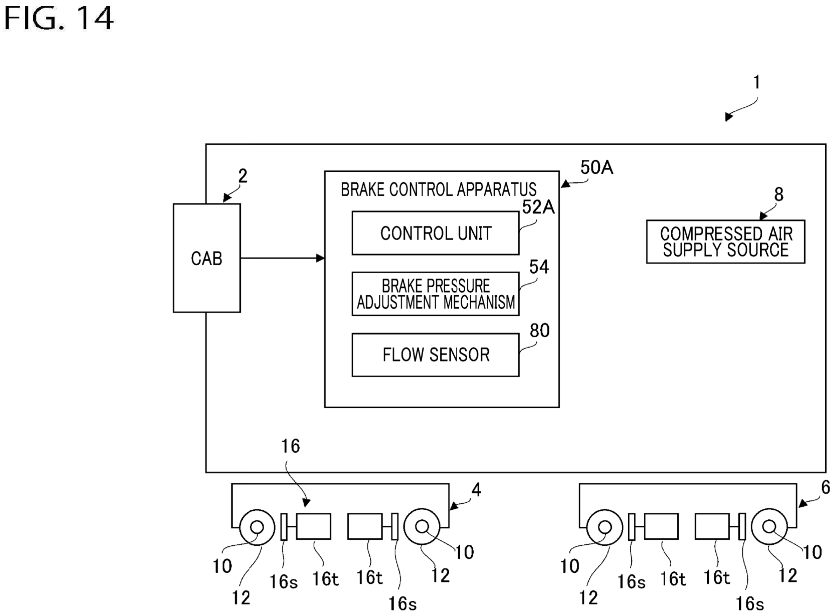

Fig. 14 is a side view schematically showing a railway vehicle 1 to which the railway brake control apparatus (hereinafter referred to as "brake control apparatus 50A") according to the second embodiment is applied. The brake control apparatus 50A is equipped with a control unit 52A, a brake pressure adjustment mechanism 54, and a flow sensor 80. The brake control apparatus 50A of the embodiment differs from the brake control apparatus 50 of the first embodiment in that it is equipped with the control unit 52A instead of the control unit 52 and is not equipped with the isolation valve 30.

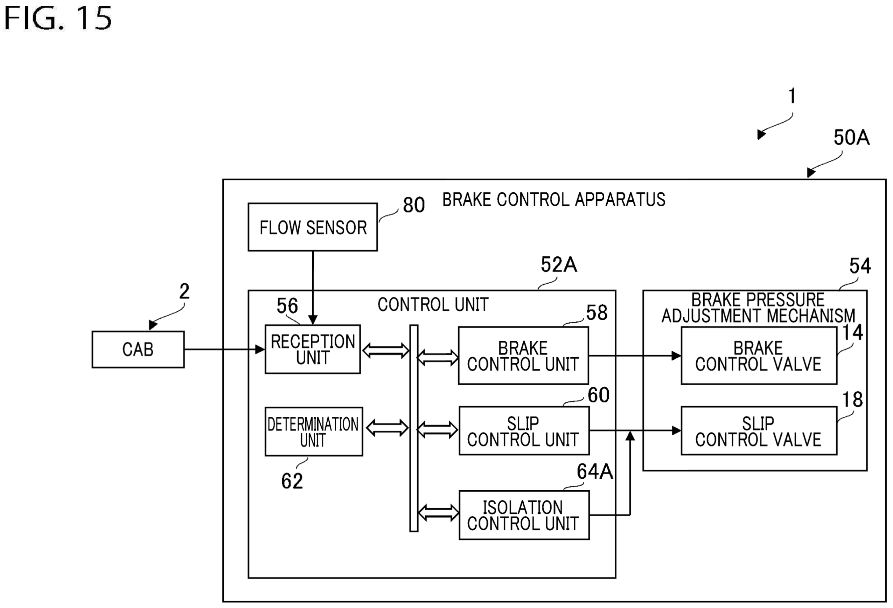

Fig. 15 is a block diagram showing the configuration of the brake control apparatus 50A. As shown in Fig. 15, the control unit 52A includes the reception unit 56, the brake control unit 58, the slip control portion 60, the determination unit 62, and an isolation control unit 64A. The brake control apparatus 50A of the embodiment differs from the brake control apparatus 50 of the first embodiment in that it includes an isolation control unit 64A instead of the isolation control unit 64.

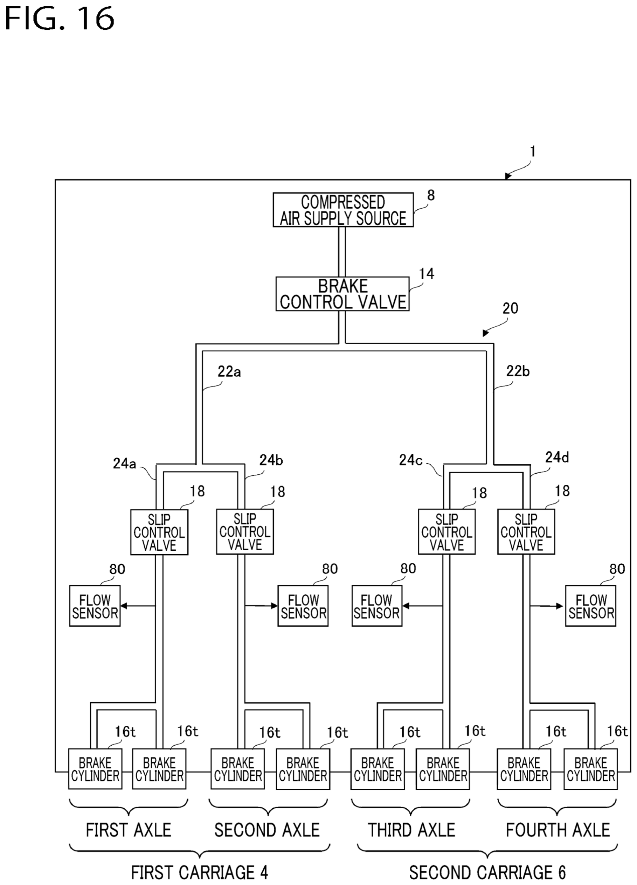

Fig. 16 is a block diagram showing an exemplary configuration related to the flow path 20 of the railway vehicle 1. As shown in Fig. 16, the function of the isolation valve 30 in the first embodiment is realized using the slip control valve 18 in this embodiment so that an isolation valve separate from the slip control valve 18 is not provided. The flow sensor 80 is provided between the slip control valve 18 and the brake cylinder 16t. The flow sensor 80 is provided one each in the second branch paths 24a-24d, respectively.

Returning to Fig. 15, when an air leak is identified by the determination unit 62, the isolation control unit 64A controls, by using the slip control valve 18 provided in the same branch path as that of the flow sensor 80 used for identification of the air leak, the downstream side of the slip control valve 18 in the flow path 20 to be isolated from the upstream side of the slip control valve 18.

As described above, the isolation valve is embodied by the slip control valve 18 in the brake control apparatus 50A of the embodiment. Since the slip control valve 18 can be used as the isolation valve, there is no need to provide the isolation valve 30 separately from the slip control valve 18. Those features of this embodiment common to those of the first embodiment provide the same advantage as the first embodiment.

Exemplary embodiments of the present disclosure have been described above in detail. The embodiments described above are merely specific examples of practicing the present disclosure. The details of the embodiments do not limit the technical scope of the present disclosure. A number of design modifications such as modification, addition, deletion, etc. of constituting elements may be made to the extent that they do not depart from the idea of the invention defined by the claims. Although the details subject to such design modification are emphasized in the embodiments by using phrases such as "of the embodiment" and "in the embodiment", details not referred to as such are also subject to design modification.

### [Variation]

A description will be given of variations. In the drawings and description of the variations, constituting elements and members identical or equivalent to those of the embodiment shall be denoted by the same reference numerals. Duplicative explanations are omitted appropriately and features different from those of the embodiment will be highlighted.

In the description of the embodiment, an example is shown in which the brake control apparatus 50, 50A is provided one each in the railroad car 1, but the embodiment is not limited to this configuration. For example, multiple brake control apparatuses 50, 50A may be provided in each railroad car 1.

In a state in which the control unit 52 controls a predetermined branch path to be isolated by a predetermined isolation valve, the brake control valve 14 may be controlled to increase the brake pressure of the other branch paths as compared to a state without the isolation control. In this way, even if a brake mechanism 16 stops operating due to isolation control, the brake pressure acting on the other brake mechanisms 16 can be increased so that a decrease in the braking force in the entire railroad vehicle 1 is prevented.

The variations described above provide the same advantage and benefit as the embodiments.

Any combination of the embodiment and the variation described above will also be useful as an embodiment of the present disclosure. New embodiments created by the combination provide the advantages of embodiment and the variation combined.

Of the embodiments disclosed in this specification, those in which a plurality of functions are provided in a distributed manner may be provided by aggregating some or all of the plurality of functions. Conversely, a plurality of functions provided in an aggregated manner may be provided by distributing some of all of the plurality of functions. Regardless of whether functions are aggregated or distributed, they may be configured so as to achieve the purpose of the invention.

## Claims

1. A brake control apparatus for railway vehicles (50), comprising:
a flow sensor (80) provided in a flow path between a brake control valve (14) controlled according to a brake command and a brake cylinder (16t) operating according to a pressure of a fluid;
an isolation valve (30) provided in a flow path (20) between the brake control valve (14) and the brake cylinder (16t);
a determination unit (62) that determines whether a fluid leak occurs based on an output value of the flow sensor (80); and
an isolation control unit (64) that controls, by using the isolation valve (30), a downstream side of the isolation valve (30) in the flow path (20) to be isolated from an upstream side of the isolation valve (30) when a fluid leak is identified.

2. The brake control apparatus for railway vehicles (50) according to claim 1,
wherein the flow path (20) branches between the brake control valve (14) and a plurality of brake cylinders (16t),
wherein the plurality of brake cylinders (16t) are respectively connected to branch paths at a branch destination of the flow path (20), and
wherein each of the flow sensor (80) and the isolation valve (30) is provided in the branch path.

3. The brake control apparatus for railway vehicles (50) according to claim 1,
wherein the determination unit (62) identifies a fluid leak when the output value of the flow sensor (80) is greater than a threshold value after the same brake command is maintained for a predetermined time.

4. The brake control apparatus for railway vehicles (50) according to claim 3,
wherein the threshold value varies depending on the brake pressure designated by the brake command.

5. The brake control apparatus for railway vehicles (50) according to claim 1,
wherein the flow sensor (80) is provided between the isolation valve (30) and the brake cylinder (16t).

6. The brake control apparatus for railway vehicles (50) according to claim 1,
wherein the isolation valve (30) is a slip control valve (18).

7. The brake control apparatus for railway vehicles (50) according to claim 1,
wherein the isolation valve (30) is separate from the slip control valve (18).

8. The brake control apparatus for railway vehicles (50) according to claim 6 or 7,
wherein the isolation control unit (64) performs isolation control when a fluid leak is identified while the slip control valve (18) is not effecting slip control.

9. The brake control apparatus for railway vehicles (50) according to claim 1,
wherein the isolation valve (30) includes a solenoid valve (32A, 32B),
wherein the isolation control unit (64) places the isolation valve (30) in an energized state when a fluid leak is identified, and
wherein the isolation valve (30) provides communication between the upstream side and the downstream side in a non-energized and isolates the downstream side from the upstream side in the energized state.

10. The brake control apparatus for railway vehicles (50) according to claim 9,
wherein the isolation valve (30) exhausts the downstream side in the energized state.

11. A brake control method for railway vehicles, comprising:
determining whether a fluid leak occurs based on an output value of a flow sensor (80) provided in a flow path (20) between a brake control valve (14) controlled according to a brake command and a brake cylinder (16t) operating according to a pressure of a fluid; and
controlling, by using an isolation valve (30) provided in the flow path (20) between the brake control valve (14) and the brake cylinder (16t), a downstream side of the isolation valve (30) in the flow path (20) to be isolated from an upstream side of the isolation valve (30) when a fluid leak is identified.

12. A brake control program for railway vehicles, comprising computer-implemented modules including:
a module that determines whether a fluid leak occurs based on an output value of a flow sensor (80) provided in a flow path between a brake control valve (14) controlled according to a brake command and a brake cylinder (16t) operating according to a pressure of a fluid; and
a module that controls, by using an isolation valve (30) provided in a flow path (20) between the brake control valve (14) and the brake cylinder (16t), a downstream side of the isolation valve (30) in the flow path (20) to be isolated from an upstream side of the isolation valve (30) when a fluid leak is identified.
